# EUROPEAN PATENT APPLICATION

(11) **EP 4 404 188 A1**
(43) Date of publication of application: **24.07.2024**
(21) Application number: 23770959.7
(22) Date of filing: 01.02.2023
(51) Int. Cl.: G10L 15/22, G10L 15/04, G10L 15/30, G10L 15/18, G10L 15/26, G06F 3/16

(54) **SERVER AND ELECTRONIC DEVICE FOR PROCESSING USER SPEECH ON BASIS OF SYNTHETIC VECTOR, AND OPERATING METHOD THEREOF**

(30) Priority: 18.03.2022 KR 20220034169; 04.05.2022 KR 20220055467
(71) Applicant: Samsung Electronics Co., Ltd., Suwon-si, Gyeonggi-do 16677 (KR)
(72) Inventor: PARK, Sangmin, Suwon-si Gyeonggi-do 16677 (KR); SONG, Gajin, Suwon-si Gyeonggi-do 16677 (KR); YEO, Jaeyung, Suwon-si Gyeonggi-do 16677 (KR)
(74) Representative: Nederlandsch Octrooibureau
(86) International application number: PCT/KR2023/001444
(87) International publication number: WO 2023/177079

(57) **Abstract**

An intelligent server is provided. The intelligent server includes a memory storing instructions and a processor electrically connected to the memory and configured to execute the instructions, in which, when the instructions are executed by the processor, the processor obtains a named entity vector and a sentence vector based on a user's utterance, obtains a synthetic vector based on the named entity vector and the sentence vector, and provides a response corresponding to the user's utterance based on the synthetic vector.

## Description

### BACKGROUND

### Technical Field

The disclosure relates to a server and an electronic device for processing a user's utterance based on a synthetic vector, and an operation method of the server and the electronic device.

### Description of Related Art

An electronic device equipped with a voice assistant function providing a service based on a user's utterance is provided in various ways. The electronic device may recognize a user's utterance through an artificial intelligence (AI) server and understand the meaning and intent of the utterance. The AI server may infer the user's intent by interpreting the user's utterance, and perform a task based on the inferred intent. The AI server may perform the task according to the user's intent represented through a natural language interaction between a user and the AI server.

The electronic device equipped with the voice assistant function may perform, in a time-series manner, an operation of classifying a domain (e.g., an application) for processing a user's utterance and an operation of performing a task corresponding to the user's utterance in the classified domain.

The above information is presented as background information only to assist with an understanding of the disclosure. No determination has been made, and no assertion is made, as to whether any of the above might be applicable as prior art with regard to the disclosure.

### Disclosure of the Invention

### Technical Solutions

A domain classifier may not be able to perform detailed and precise domain classification on user's utterances including words corresponding to named entities (or newly named entities). In contrast, a domain that performs question and answer corresponding to a user's utterance, for example, a domain that generates a response corresponding to a user's utterance which is an inquiry, may process user's utterances including words corresponding to various named entities (or newly named entities) relatively accurately and stably. An electronic device may perform, as separate tasks, an operation of classifying a domain for processing a user's utterance and an operation of generating a response corresponding to a user's utterance (e.g., an inquiry). When a user's utterance includes a new word (e.g., a word corresponding to a newly named entity), the electronic device may not be able to provide a desirable response to a user. For example, as the domain classifier is not able to desirably classify a domain (e.g., application) for processing the utterance including the new word, the electronic device may not be able to provide the desirable response to the user. For an example, as the utterance that is otherwise supposed to be processed in the domain performing question and answer is assigned to another domain due to the low performance of the domain classifier, the electronic device may not be able to provide the desirable response to the user. Thus, there is a desire for a technology for providing a desirable response to a user's utterance including a new word (e.g., a word corresponding to a newly named entity).

Aspects of the disclosure are to address at least the above-mentioned problems and/or disadvantages and to provide at least the advantages described below. Accordingly, an aspect of the disclosure is to provide a response corresponding to a user's utterance including a new word through a simultaneous or parallel performance of an operation of extracting a user's intent from a user's utterance (e.g., an operation of obtaining intent information corresponding to the user's utterance) and an operation of obtaining a response corresponding to the user's utterance (e.g., an utterance which is an inquiry).

Additional aspects will be set forth in part in the description which follows and, in part, will be apparent from the description, or may be learned by practice of the presented embodiments.

In accordance with an aspect of the disclosure, an intelligent server is provided. The intelligent server includes a memory storing instructions and a processor electrically connected to the memory and configured to execute the instructions. When the instructions are executed by the processor, the processor obtains a named entity vector and a sentence vector based on a user's utterance, obtains a synthetic vector based on the named entity vector and the sentence vector, and provides a response corresponding to the user's utterance based on the synthetic vector.

In accordance with another aspect of the disclosure, an intelligent server is provided. The intelligent server includes a memory storing instructions and a processor electrically connected to the memory and configured to execute the instructions. When the instructions are executed by the processor, the processor obtains first intent information corresponding to a user's utterance, obtains a named entity vector and a sentence vector based on the user's utterance in response to a reliability of the first intent information being less than a threshold value, obtains a synthetic vector based on the named entity vector and the sentence vector, and provides a response corresponding to the user's utterance based on the synthetic vector.

In accordance with another aspect of the disclosure, an operation method of an electronic device is provided. The operation method includes obtaining a named entity vector and a sentence vector based on a user's utterance, obtaining a synthetic vector based on the named entity vector and the sentence vector, and providing a response corresponding to the user's utterance based on the synthetic vector.

### Effects

An embodiment of the disclosure are to provide a desirable response corresponding to a user's intent to a user and improve the performance associated with a user's experience of satisfaction with a service (e.g., the response), even when a user's utterance including a new word (e.g., a word corresponding to a newly named entity) is received.

An embodiment of the disclosure are to provide a response corresponding to a user's utterance including a new word through a simultaneous or parallel performance of an operation of extracting a user's intent from the user's utterance (e.g., an operation of obtaining intent information corresponding to the user's utterance) and an operation of obtaining the response corresponding to the user's utterance (e.g., an utterance which is an inquiry).

An embodiment of the disclosure are to desirably classify a domain (e.g., application) for processing a user's utterance, using a named entity vector obtained from a module performing question and answer (e.g., a module generating a response corresponding to a user's utterance).

An embodiment of the disclosure are to save time and resources used to provide a response through a selective performance of an operation of providing a response based on a synthetic vector (e.g., a synthetic vector including at least a portion of a named entity vector obtained from a module performing question and answer).

An embodiment of the disclosure are to recognize a user's utterance including a new word, in accordance with a user's intent, based on an updated database (DB).

Other aspects, advantages, and salient features of the disclosure will become apparent to those skilled in the art from the following detailed description, which, taken in conjunction with the annexed drawings, discloses an embodiment of the disclosure.

### BRIEF DESCRIPTION OF THE DRAWINGS

The above and other aspects, features, and advantages of certain embodiments of the disclosure will be more apparent from the following detailed description, taken in conjunction with the accompanying drawings, in which:
FIG. 1 is a block diagram illustrating an example electronic device in a network environment according to an embodiment of the disclosure;
FIG. 2 is a block diagram illustrating an example integrated intelligent system according to an embodiment of the disclosure;
FIG. 3 is a diagram illustrating an example form in which concept and action relationship information is stored in a database (DB) according to an embodiment of the disclosure;
FIG. 4 is a diagram illustrating example screens showing an electronic device processing a received voice input through an intelligent application (app) according to an embodiment of the disclosure;
FIGS. 5A and 5B are diagrams illustrating an example of processing a user's utterance by an intelligent server according to embodiments of the disclosure;
FIG. 6 is diagram illustrating an example of an electronic device according to an embodiment of the disclosure;
FIGS. 7A and 7B are diagrams illustrating an example of processing a user's utterance by an electronic device according to embodiments of the disclosure;
FIGS. 8A and 8B are diagrams illustrating an example of processing a user's utterance by an electronic device according to embodiments of the disclosure;
FIGS. 9A and 9B are diagrams illustrating an example of processing a user's utterance by an electronic device according to embodiments of the disclosure;
FIG. 10 is an example screen of an electronic device processing a user's utterance according to an embodiment of the disclosure;
FIG. 11 is a flowchart illustrating an example of an operation method of an electronic device according to an embodiment of the disclosure; and
FIG. 12 is a flowchart illustrating an example of an operation method of an electronic device according to an embodiment of the disclosure.

The same reference numerals are used to represent the same elements throughout the drawings.

### DETAILED DESCRIPTION

The following description with reference to the accompanying drawings is provided to assist in a comprehensive understanding of embodiments of the disclosure as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope and spirit of the disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the disclosure. Accordingly, it should be apparent to those skilled in the art that the following description of embodiments of the disclosure is provided for illustration purpose only and not for the purpose of limiting the disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

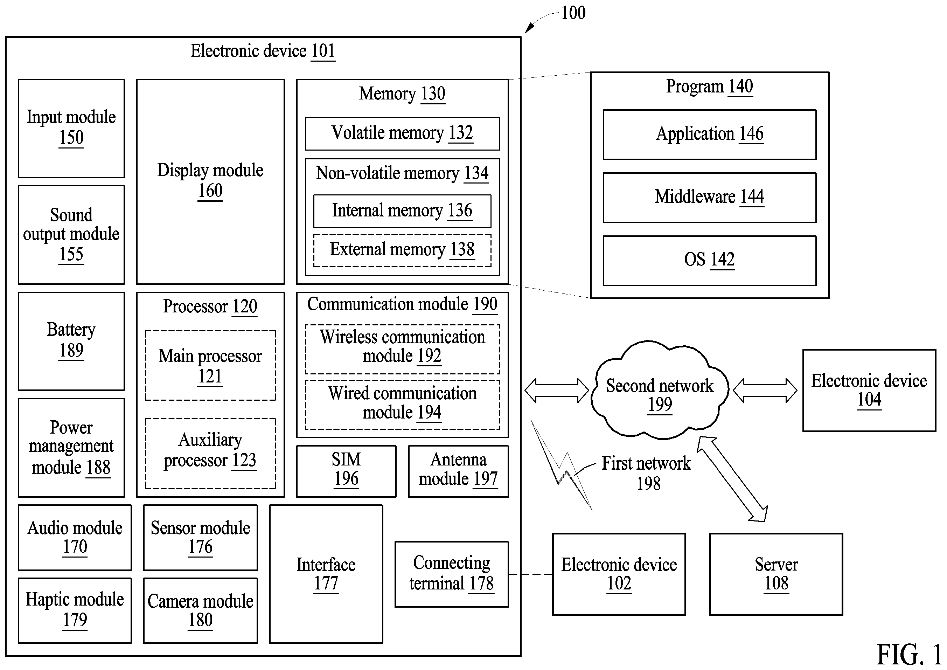

FIG. 1 is a block diagram illustrating an example electronic device in a network environment according to an embodiment of the disclosure.

Referring to FIG. 1, an electronic device 101 in a network environment 100 may communicate with an electronic device 102 via a first network 198 (e.g., a short-range wireless communication network), or communicate with at least one of an electronic device 104 and a server 108 via a second network 199 (e.g., a long-range wireless communication network). According to an embodiment, the electronic device 101 may communicate with the electronic device 104 via the server 108. According to an embodiment, the electronic device 101 may include a processor 120, a memory 130, an input module 150, a sound output module 155, a display module 160, an audio module 170, and a sensor module 176, an interface 177, a connecting terminal 178, a haptic module 179, a camera module 180, a power management module 188, a battery 189, a communication module 190, a subscriber identification module (SIM) 196, or an antenna module 197. In an embodiment, at least one (e.g., the connecting terminal 178) of the above components may be omitted from the electronic device 101, or one or more other components may be added to the electronic device 101. In an embodiment, some (e.g., the sensor module 176, the camera module 180, or the antenna module 197) of the components may be integrated as a single component (e.g., the display module 160).

The processor 120 may execute, for example, software (e.g., a program 140) to control at least one other component (e.g., a hardware or software component) of the electronic device 101 connected to the processor 120 and may perform various data processing or computations. According to an embodiment, as at least a part of data processing or computations, the processor 120 may store a command or data received from another component (e.g., the sensor module 176 or the communication module 190) in a volatile memory 132, process the command or data stored in the volatile memory 132, and store resulting data in a non-volatile memory 134. According to an embodiment, the processor 120 may include a main processor 121 (e.g., a central processing unit (CPU) or an application processor (AP)) or an auxiliary processor 123 (e.g., a graphics processing unit (GPU), a neural processing unit (NPU), an image signal processor (ISP), a sensor hub processor, or a communication processor (CP)) that is operable independently from or in conjunction with, the main processor 121. For example, when the electronic device 101 includes the main processor 121 and the auxiliary processor 123, the auxiliary processor 123 may be adapted to consume less power than the main processor 121 or to be specific to a specified function. The auxiliary processor 123 may be implemented separately from the main processor 121 or as a part of the main processor 121.

The auxiliary processor 123 may control at least some of functions or states related to at least one (e.g., the display device 160, the sensor module 176, or the communication module 190) of the components of the electronic device 101, instead of the main processor 121 while the main processor 121 is in an inactive (e.g., sleep) state or along with the main processor 121 while the main processor 121 is an active state (e.g., executing an application). According to an embodiment, the auxiliary processor 123 (e.g., an ISP or a CP) may be implemented as a portion of another component (e.g., the camera module 180 or the communication module 190) that is functionally related to the auxiliary processor 123. According to an embodiment, the auxiliary processor 123 (e.g., an NPU) may include a hardware structure specifically for artificial intelligence (AI) model processing. An AI model may be generated by machine learning. The machine learning may be performed by, for example, the electronic device 101, in which the AI model is performed, or performed via a separate server (e.g., the server 108). Learning algorithms may include, but are not limited to, for example, supervised learning, unsupervised learning, semi-supervised learning, or reinforcement learning. The AI model may include a plurality of artificial neural network layers. An artificial neural network may include, for example, a deep neural network (DNN), a convolutional neural network (CNN), a recurrent neural network (RNN), a restricted Boltzmann machine (RBM), a deep belief network (DBN), and a bidirectional recurrent deep neural network (BRDNN), a deep Q-network, or a combination of two or more thereof, but is not limited thereto. The AI model may alternatively or additionally include a software structure other than the hardware structure.

The memory 130 may store various pieces of data used by at least one component (e.g., the processor 120 or the sensor module 176) of the electronic device 101. The various pieces of data may include, for example, software (e.g., the program 140) and input data or output data for a command related thereto. The memory 130 may include the volatile memory 132 or the non-volatile memory 134. The non-volatile memory 134 may include an internal memory 136 and an external memory 138.

The program 140 may be stored as software in the memory 130 and may include, for example, an operating system (OS) 142, middleware 144, or an application 146.

The input module 150 may receive, from outside (e.g., a user) the electronic device 101, a command or data to be used by another component (e.g., the processor 120) of the electronic device 101. The input module 150 may include, for example, a microphone, a mouse, a keyboard, a key (e.g., a button), or a digital pen (e.g., a stylus pen).

The sound output module 155 may output a sound signal to the outside of the electronic device 101. The sound output module 155 may include, for example, a speaker or a receiver. The speaker may be used for general purposes, such as playing multimedia or playing a recording. The receiver may be used to receive an incoming call. According to an embodiment, the receiver may be implemented separately from the speaker or as a part of the speaker.

The display module 160 may visually provide information to the outside (e.g., a user) of the electronic device 101. The display module 160 may include, for example, a display, a hologram device, or a projector, and a control circuitry for controlling a corresponding one of the display, the hologram device, and the projector. According to an embodiment, the display module 160 may include a touch sensor adapted to sense a touch, or a pressure sensor adapted to measure an intensity of a force of the touch.

The audio module 170 may convert sound into an electric signal or vice versa. According to an embodiment, the audio module 170 may obtain the sound via the input module 150 or output the sound via the sound output module 155 or an external electronic device (e.g., the electronic device 102, such as a speaker or headphones) directly or wirelessly connected to the electronic device 101.

The sensor module 176 may detect an operational state (e.g., power or temperature) of the electronic device 101 or an environmental state (e.g., a state of a user) external to the electronic device 101 and generate an electric signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used by the electronic device 101 to couple with an external electronic device (e.g., the electronic device 102) directly (e.g., by wire) or wirelessly. According to an embodiment, the interface 177 may include, for example, a high-definition multimedia interface (HDMI), a universal serial bus (USB) interface, a secure digital (SD) card interface, or an audio interface.

The connecting terminal 178 may include a connector via which the electronic device 101 may physically connect to an external electronic device (e.g., the electronic device 102). According to an embodiment, the connecting terminal 178 may include, for example, an HDMI connector, a USB connector, an SD card connector, or an audio connector (e.g., a headphones connector).

The haptic module 179 may convert an electric signal into a mechanical stimulus (e.g., a vibration or a movement) or an electrical stimulus, which may be recognized by a user via their tactile sensation or kinesthetic sensation. According to an embodiment, the haptic module 179 may include, for example, a motor, a piezoelectric element, or an electric stimulator.

The camera module 180 may capture a still image and moving images. According to an embodiment, the camera module 180 may include one or more lenses, image sensors, ISPs, and flashes.

The power management module 188 may manage power supplied to the electronic device 101. According to an embodiment, the power management module 188 may be implemented as, for example, at least a part of a power management integrated circuit (PMIC).

The battery 189 may supply power to at least one component of the electronic device 101. According to an embodiment, the battery 189 may include, for example, a primary cell, which is not rechargeable, a secondary cell, which is rechargeable, or a fuel cell.

The communication module 190 may support establishing a direct (e.g., wired) communication channel or a wireless communication channel between the electronic device 101 and an external electronic device (e.g., the electronic device 102, the electronic device 104, or the server 108) and performing communication via the established communication channel. The communication module 190 may include one or more CPs that are operable independently from the processor 120 (e.g., an AP) and that support direct (e.g., wired) communication or wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device, for example, the electronic device 104, via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a fifth generation (5G) network, a next-generation communication network, the Internet, or a computer network (e.g., an LAN or a wide area network (WAN))). These various types of communication modules may be implemented as a single component (e.g., a single chip), or may be implemented as multiple components (e.g., multiple chips) separate from each other. The wireless communication module 192 may identify and authenticate the electronic device 101 in a communication network, such as the first network 198 or the second network 199, using subscriber information (e.g., international mobile subscriber identity (IMSI)) stored in the SIM 196.

The wireless communication module 192 may support a 5G network after a fourth generation (4G) network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., a millimeter wave (mmWave) band) to achieve, e.g., a high data transmission rate. The wireless communication module 192 may support various technologies for securing performance on a high-frequency band, such as, e.g., beamforming, massive multiple-input and multiple-output (MIMO), full dimensional MIMO (FD-MIMO), an antenna array, analog beamforming, or a large-scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20 Gbps or more) for implementing eMBB, loss coverage (e.g., 164 dB or less) for implementing mMTC, or U-plane latency (e.g., 0.5 ms or less for each of downlink (DL) and uplink (UL), or a round trip of 1 ms or less) for implementing URLLC.

The antenna module 197 may transmit or receive a signal or power to or from the outside (e.g., an external electronic device) of the electronic device 101. According to an embodiment, the antenna module 197 may include an antenna including a radiating element including a conductive material or a conductive pattern formed in or on a substrate (e.g., a printed circuit board (PCB)). According to an embodiment, the antenna module 197 may include a plurality of antennas (e.g., an antenna array). In such a case, at least one antenna appropriate for a communication scheme used in a communication network, such as the first network 198 or the second network 199, may be selected by, for example, the communication module 190 from the plurality of antennas. The signal or power may be transmitted or received between the communication module 190 and the external electronic device via the at least one selected antenna. According to an embodiment, another component (e.g., a radio frequency integrated circuit (RFIC)) other than the radiating element may be additionally formed as a part of the antenna module 197.

According to an embodiment, the antenna module 197 may form an mmWave antenna module. According to an embodiment, the mmWave antenna module may include a PCB, an RFIC on a first surface (e.g., a bottom surface) of the PCB, or adjacent to the first surface of the PCB and capable of supporting a designated high-frequency band (e.g., a mmWave band), and a plurality of antennas (e.g., an antenna array) disposed on a second surface (e.g., a top or a side surface) of the PCB, or adjacent to the second surface of the PCB and capable of transmitting or receiving signals in the designated high-frequency band.

At least some of the above-described components may be coupled mutually and exchange signals (e.g., commands or data) therebetween via an inter-peripheral communication scheme (e.g., a bus, general-purpose input and output (GPIO), serial peripheral interface (SPI), or mobile industry processor interface (MIPI)).

According to an embodiment, commands or data may be transmitted or received between the electronic device 101 and the external electronic device (e.g., the electronic device 104) via the server 108 coupled with the second network 199. Each of the external electronic devices (e.g., the electronic device 102 and 104) may be a device of the same type as or a different type from the electronic device 101. According to an embodiment, some or all the operations to be executed by the electronic device 101 may be executed by one or more of the external electronic devices (e.g., the electronic devices 102 and 104, and the server 108). For example, if the electronic device 101 needs to perform a function or a service automatically, or in response to a request from a user or another device, the electronic device 101, instead of, or in addition to, executing the function or the service, may request one or more external electronic devices to perform at least a part of the function or service. The one or more external electronic devices receiving the request may perform the at least part of the function or service requested, or an additional function or an additional service related to the request, and may transfer a result of the performance to the electronic device 101. The electronic device 101 may provide the result, with or without further processing of the result, as at least a part of a response to the request. To that end, cloud computing, distributed computing, mobile edge computing (MEC), or client-server computing technology may be used, for example. The electronic device 101 may provide ultra-low latency services using, e.g., distributed computing or MEC. In an embodiment, the external electronic device (e.g., the electronic device 104) may include an Internet-of-things (IoT) device. The server 108 may be an intelligent server using machine learning and/or a neural network. According to an embodiment, the external electronic device (e.g., the electronic device 104) or the server 108 may be included in the second network 199. The electronic device 101 may be applied to intelligent services (e.g., a smart home, a smart city, a smart car, or healthcare) based on 5G communication technology or IoT-related technology.

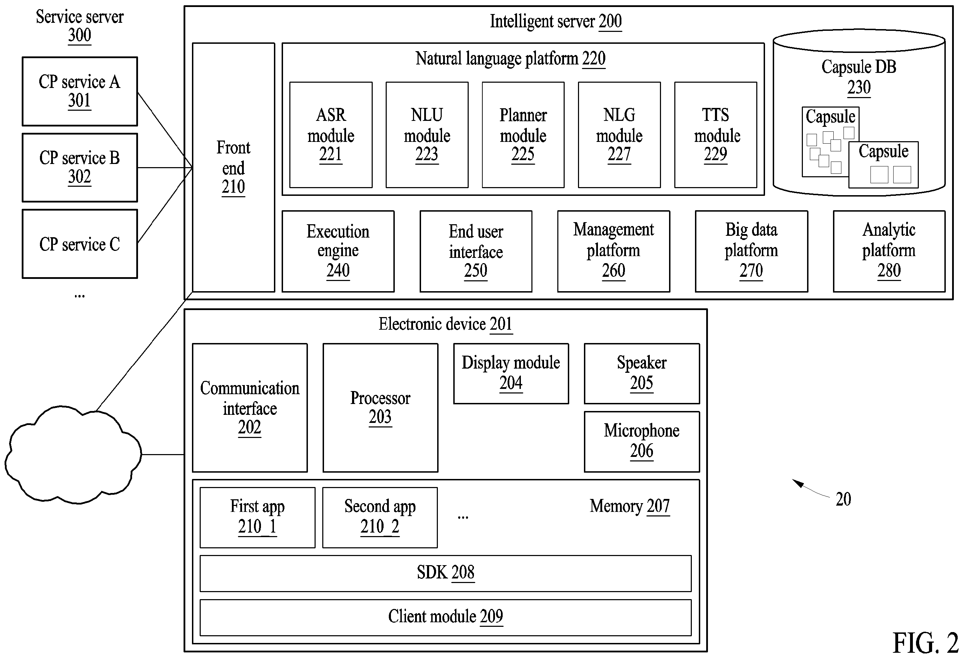

FIG. 2 is a block diagram illustrating an example integrated intelligent system according to an embodiment of the disclosure.

Referring to FIG. 2, according to an embodiment, an integrated intelligent system 20 may include an electronic device 201 (e.g., the electronic device 101 of FIG. 1), an intelligent server 200 (e.g., the server 108 of FIG. 1), and a service server 300 (e.g., the server 108 of FIG. 1).

The electronic device 201 may be a terminal device that is connectable to the Internet, for example, a mobile phone, a smartphone, a personal digital assistant (PDA), a laptop computer, a television (TV), a white home appliance, a wearable device, a head-mounted display (HMD), or a smart speaker.

As illustrated, the electronic device 201 may include a communication interface 202 (e.g., the interface 177 of FIG. 1), a microphone 206 (e.g., the input module 150 of FIG. 1), a speaker 205 (e.g., the sound output module 155 of FIG. 1), a display module 204 (e.g., the display module 160 of FIG. 1), a memory 207 (e.g., the memory 130 of FIG. 1), or a processor 203 (e.g., the processor 120 of FIG. 1). The components listed above may be operationally or electrically connected to each other.

The communication interface 202 may be connected to an external device to transmit and receive data to and from the external device. The microphone 206 may receive sound (e.g., an utterance from a user) and convert the sound into an electrical signal. The speaker 205 may output the electrical signal as sound (e.g., voice).

The display module 204 may display an image or video. The display module 204 may also display a graphical user interface (GUI) of an application (app) (or an application program) being executed. The display module 204 may receive a touch input through a touch sensor. For example, the display module 204 may receive a text input through the touch sensor in an on-screen keyboard area displayed on the display module 204.

The memory 207 may store therein a client module 209, a software development kit (SDK) 208, and a plurality of apps (e.g., apps 210_1 and 210_2). The client module 209 and the SDK 208 may configure a framework (or a solution program) for performing general-purpose functions. In addition, the client module 209 or the SDK 208 may configure a framework for processing a user input (e.g., a voice input, a text input, and a touch input).

The apps (e.g., apps 210_1 and 210_2) stored in the memory 207 may be programs for performing predetermined functions. The apps may include a first app 210_1, a second app 210_2, and the like. The apps may each include a plurality of actions for performing the predetermined functions. For example, the apps may include an alarm app, a messaging app, and/or a scheduling app. The apps may be executed by the processor 203 to sequentially execute at least a portion of the actions.

The processor 203 may control the overall operation of electronic device 201. For example, the processor 203 may be electrically connected to the communication interface 202, the microphone 206, the speaker 205, and the display module 204 to perform predetermined operations.

The processor 203 may also perform a predetermined function by executing a program stored in the memory 207. For example, the processor 203 may execute at least one of the client module 209 or the SDK 208 to perform the following operations for processing a user input. For example, the processor 203 may control the actions of the apps through the SDK 208. The following operations described as operations of the client module 209 or the SDK 208 may be operations to be performed by the execution of the processor 203.

The client module 209 may receive a user input. For example, the client module 209 may receive a voice signal corresponding to a user's utterance sensed through the microphone 206. Alternatively, the client module 209 may receive a touch input sensed through the display module 204. Alternatively, the client module 209 may receive a text input sensed through a keyboard or an on-screen keyboard. The client module 209 may also receive, as non-limiting examples, various types of user inputs sensed through an input module included in the electronic device 201 or an input module connected to the electronic device 201. The client module 209 may transmit the received user input to the intelligent server 200. The client module 209 may transmit, to the intelligent server 200, state information of the electronic device 201 along with the received user input. The state information may be, for example, app execution state information indicating a state of execution of an app.

The client module 209 may also receive a result corresponding to the received user input. For example, when the intelligent server 200 is able to calculate the result corresponding to the received user input, the client module 209 may receive the result corresponding to the received user input. The client module 209 may display the received result on the display module 204 and output the received result in audio through the speaker 205.

The client module 209 may receive a plan corresponding to the received user input. The client module 209 may display, on the display module 204, the results of executing a plurality of actions of an app according to the plan. For example, the client module 209 may sequentially display the results of executing the actions on the display module 204 and output the results in audio through the speaker 205. For anexample, electronic device 201 may display only a result of executing a portion of the actions (e.g., a result of executing the last action) on the display module 204 and output the result in audio through the speaker 205.

The client module 209 may receive, from the intelligent server 200, a request for information required to calculate the result corresponding to the user input. The client module 209 may transmit the required information to the intelligent server 200 in response to the request.

The client module 209 may transmit information on the results of executing the actions according to the plan to the intelligent server 200. The intelligent server 200 may verify that the received user input has been correctly processed using the information.

The client module 209 may include a voice recognition module. The client module 209 may recognize a voice input for performing a limited function through the voice recognition module. For example, the client module 209 may execute an intelligent app for processing a voice input to perform an organic action through a set input (e.g., Wake up!).

The intelligent server 200 may receive information related to a user's voice input from the electronic device 201 through a communication network. The intelligent server 200 may change data related to the received voice input into text data. The intelligent server 200 may generate a plan for performing a task corresponding to the voice input based on the text data.

The plan may be generated by an artificial intelligence (AI) system. The AI system may be a rule-based system or a neural network-based system (e.g., a feedforward neural network (FNN) or a recurrent neural network (RNN)). Alternatively, the AI system may be a combination thereof or another AI system. The plan may be selected from a set of predefined plans or may be generated in real time in response to a request from a user. For example, the AI system may select at least one plan from among the predefined plans.

The intelligent server 200 may transmit a result according to the generated plan to the electronic device 201 or transmit the generated plan to the electronic device 201. The electronic device 201 may display the result according to the plan on the display module 204. The electronic device 201 may display, on the display module 204, a result of executing an action according to the plan.

The intelligent server 200 may include a front end 210, a natural language platform 220, a capsule database (DB) 230, an execution engine 240, an end user interface 250, a management platform 260, a big data platform 270, or an analytic platform 280.

The front end 210 may receive a user input from the electronic device 201. The front end 210 may transmit a response corresponding to the user input.

The natural language platform 220 may include an automatic speech recognition (ASR) module 221, a natural language understanding (NLU) module 223, a planner module 225, a natural language generator (NLG) module 227, or a text-to-speech (TTS) module 229.

The ASR module 221 may convert a voice input received from the electronic device 201 into text data. The NLU module 223 may understand a user's intention (or intent herein) using the text data of the voice input. For example, the NLU module 223 may understand the user's intent by performing a syntactic or semantic analysis on a user input in the form of text data. The NLU module 223 may understand semantics of a word extracted from the user input using a linguistic feature (e.g., a syntactic element) of a morpheme or phrase and determine the intent by matching the semantics of the word to the intent. The NLU module 223 may obtain intent information corresponding to a user's utterance. The intent information may be information indicating a user's intent that is determined through an analysis of text data. The intent information may be information indicating an operation or function the user desires to execute using a device.

The planner module 225 may generate a plan using the intent determined by the NLU module 223 and a parameter. The planner module 225 may determine a plurality of domains required to perform a task based on the determined intent. The planner module 225 may determine a plurality of actions included in each of the domains determined based on the intent. The planner module 225 may determine a parameter required to execute the determined actions or a resulting value output by the execution of the actions. The parameter and the resulting value may be defined as a concept of a predetermined form (or class). Accordingly, a plan may include a plurality of actions and a plurality of concepts determined by a user's intent. The planner module 225 may determine a relationship between the actions and the concepts stepwise (or hierarchically). For example, the planner module 225 may determine an order of executing the actions determined based on the user's intent, based on the concepts. That is, the planner module 225 may determine the order of executing the actions based on the parameter required for the execution of the actions and the result output by the execution of the actions. Accordingly, the planner module 225 may generate the plan including connection information (e.g., ontology) between the actions and the concepts. The planner module 225 may generate a plan using information stored in the capsule DB 230 that stores therein a set of relationships between concepts and actions.

The NLG module 227 may change predetermined information into a text form. The information changed into the text form may be provided in the form of an utterance in a natural language. The TTS module 229 may change the information in the text form into information in a voice (or speech) form.

According to an embodiment, some or all of the functions of the natural language platform 220 may also be implemented in the electronic device 201.

The capsule DB 230 may store therein information associated with relationships between a plurality of concepts and a plurality of actions corresponding to a plurality of domains. A capsule described herein may include a plurality of action objects (or action information) and concept objects (or concept information) included in a plan. The capsule DB 230 may store a plurality of capsules in the form of a concept-action network (CAN). The capsules may be stored in a function registry included in the capsule DB 230.

The capsule DB 230 may include a strategy registry that stores therein strategy information required to determine a plan corresponding to a user input (e.g., a voice input). When there are a plurality of plans corresponding to the user input, the strategy information may include reference information for determining a single plan. The capsule DB 230 may include a follow-up registry that stores therein information associated with follow-up actions for suggesting a follow-up action to a user in a corresponding predetermined situation. The follow-up action may include, for example, a follow-up utterance (or a subsequent utterance herein). The capsule DB 230 may include a layout registry that stores therein layout information associated with a layout of information output through the electronic device 201. The capsule DB 230 may include a vocabulary registry that stores therein vocabulary information included in capsule information. The capsule DB 230 may include a dialog registry that stores therein information associated with a dialog (or an interaction) with a user. The capsule DB 230 may update the stored objects through a developer tool. The developer tool may include, for example, a function editor for updating an action object or a concept object. The developer tool may include a vocabulary editor for updating a vocabulary. The developer tool may include a strategy editor for generating and registering a strategy for determining a plan. The developer tool may include a dialog editor for generating a dialog with a user. The developer tool may include a follow-up editor for activating a follow-up objective and editing a follow-up utterance that provides a hint. The follow-up objective may be determined based on a currently set objective, a user's preference, or an environmental condition. The capsule DB 230 may also be implemented in the electronic device 201.

The execution engine 240 may calculate a result using a generated plan. The end user interface 250 may transmit the calculated result to the electronic device 201. Accordingly, the electronic device 201 may receive the result and provide the received result to a user. The management platform 260 may manage information used by the intelligent server 200. The big data platform 270 may collect data of the user. The analytic platform 280 may manage a quality of service (QoS) of the intelligent server 200. For example, the analytic platform 280 may manage the components and a processing rate (or efficiency) of the intelligent server 200.

The service server 300 may provide a preset service (e.g., food ordering or hotel reservation) to the electronic device 201. The service server 300 may be a server operated by a third party. The service server 300 may provide the intelligent server 200 with information to be used for generating a plan corresponding to a received user input. The provided information may be stored in the capsule DB 230. In addition, the service server 300 may provide the intelligent server 200 with resulting information according to the plan.

In the integrated intelligent system 20 described above, the electronic device 201 may provide various intelligent services to a user in response to a user input from the user. The user input may include, for example, an input made through a physical button, a touch input, or a voice input.

The electronic device 201 may provide a voice (or speech) recognition service through an intelligent app (or a voice/speech recognition app) stored therein. In this case, the electronic device 201 may recognize a user utterance or a voice input received from a user through the microphone 206 and provide the user with a service corresponding to the recognized voice input.

The electronic device 201 may perform a predetermined action alone or together with the intelligent server 200 and/or the service server 300 based on the received voice input. For example, the electronic device 201 may execute an app corresponding to the received voice input and perform the action through the executed app.

When the electronic device 201 provides the service together with the intelligent server 200 and/or the service server 300, the electronic device 201 may detect a user utterance using the microphone 206 and generate a signal (or voice data) corresponding to the detected user utterance. The electronic device 201 may transmit the voice data to the intelligent server 200 using the communication interface 202.

In response to the voice input received from the electronic device 201, the intelligent server 200 may generate a plan for performing a task corresponding to the voice input or a result of performing an action according to the plan. The plan may include, for example, a plurality of actions for performing the task corresponding to the voice input of the user, and a plurality of concepts related to the actions. The concepts may define parameters input to the execution of the actions or resulting values output by the execution of the actions. The plan may include connection information (e.g., ontology) between the actions and the concepts.

The electronic device 201 may receive a response using the communication interface 202. The electronic device 201 may output a voice signal generated in the electronic device 201 to the outside using the speaker 205, or output an image generated in the electronic device 201 to the outside using the display module 204.

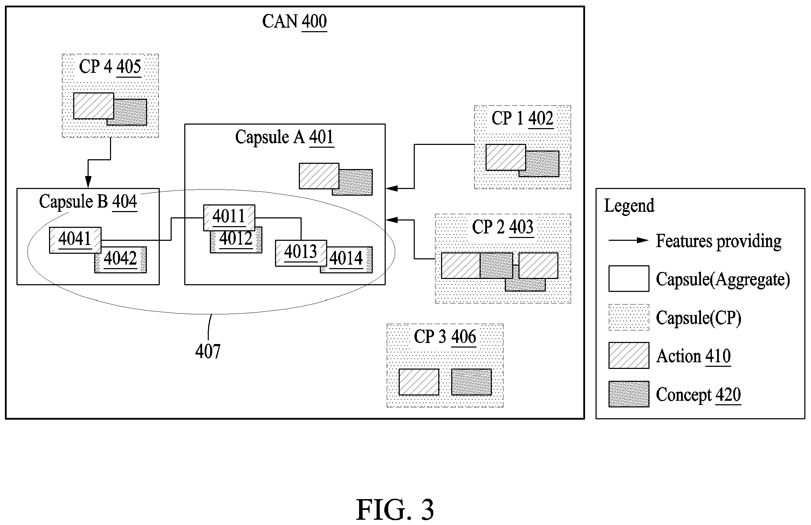

FIG. 3 is a diagram illustrating an example form in which concept and action relationship information is stored in a DB according to an embodiment of the disclosure.

A capsule DB (e.g., the capsule DB 230 of FIG. 2) of an intelligent server (e.g., the intelligent server 200 of FIG. 2) may store therein capsules in the form of a concept action network (CAN) 400. The capsule DB may store, in the form of the CAN 400, actions for processing a task corresponding to a voice input of a user and parameters necessary for the actions.

Referring to FIG. 3, the capsule DB may store a plurality of capsules, for example, a capsule A 401 and a capsule B 404, respectively corresponding to a plurality of domains (e.g., apps). One capsule (e.g., the capsule A 401) may correspond to one domain (e.g., a location (geo) app). In addition, one capsule may correspond to at least one service provider (e.g., CP 1 402 or CP2 403) for performing a function for a domain related to the capsule. One capsule may include at least one action 410 and at least one concept 420 for performing a preset function.

A natural language platform (e.g., the natural language platform 220 of FIG. 2) may generate a plan for performing a task corresponding to a received voice input using the capsules stored in the capsule DB. For example, a planner module (e.g., the planner module 225 of FIG. 2) of the natural language platform may generate the plan using the capsules stored in the capsule DB. For example, the planner module may generate a plan 407 using actions 4011 and 4013 and concepts 4012 and 4014 of the capsule A 401 and using an action 4041 and a concept 4042 of the capsule B 404.

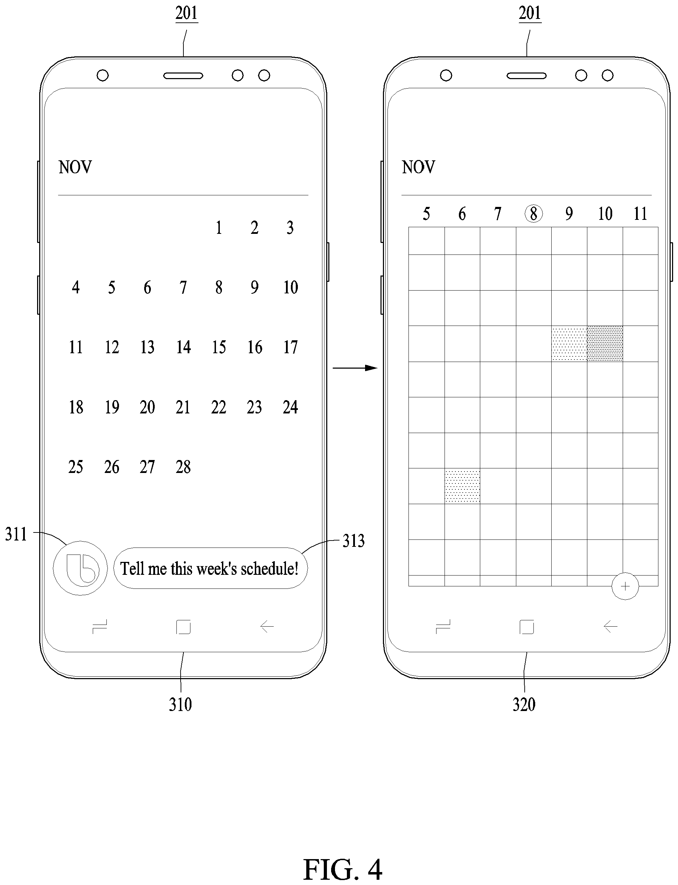

FIG. 4 is a diagram illustrating example screens showing an electronic device processing a received voice input through an intelligent app according to an embodiment of the disclosure.

The electronic device 201 may execute an intelligent app to process a user input through an intelligent server (e.g., the intelligent server 200 of FIG. 2).

Referring to FIG. 4, according to an embodiment, on a first screen 310, when recognizing a predetermined voice input (e.g., Wake up!) or receiving an input through a hardware key (e.g., a dedicated hardware key), the electronic device 201 may execute an intelligent app for processing the voice input. For example, the electronic device 201 may execute the intelligent app during the execution of a scheduling app. The electronic device 201 may display an object (e.g., an icon) 311 corresponding to the intelligent app on a display module (e.g., the display module 204 of FIG. 2). The electronic device 201 may receive the voice input corresponding to a user utterance. That is, the electronic device 201 may receive a voice input "Tell me this week's schedule!" for example. The electronic device 201 may display, on the display module 204, a user interface (UI) 313 (e.g., an input window) of the intelligent app on which text data of the received voice input is displayed.

On a second screen 320, the electronic device 201 may display, on the display module 204, a result corresponding to the received voice input. For example, the electronic device 201 may receive a plan corresponding to the received user input and display, on the display module 204, "this week's schedule" according to the plan.

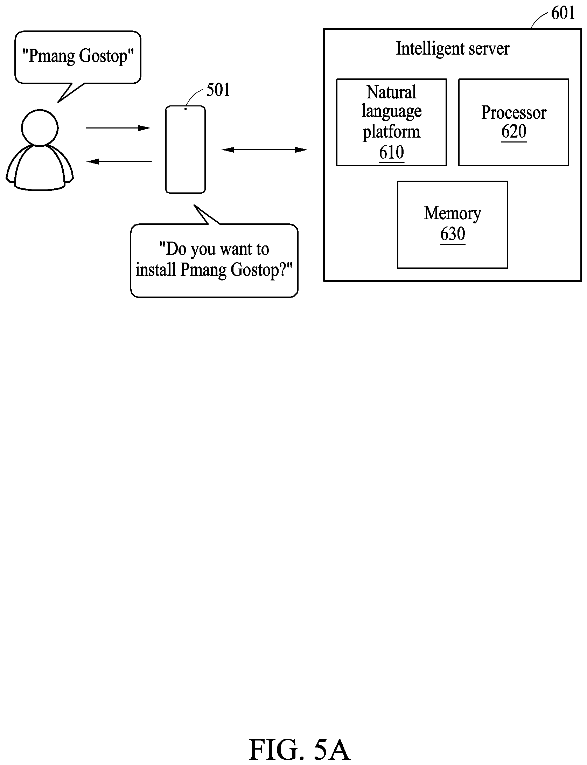

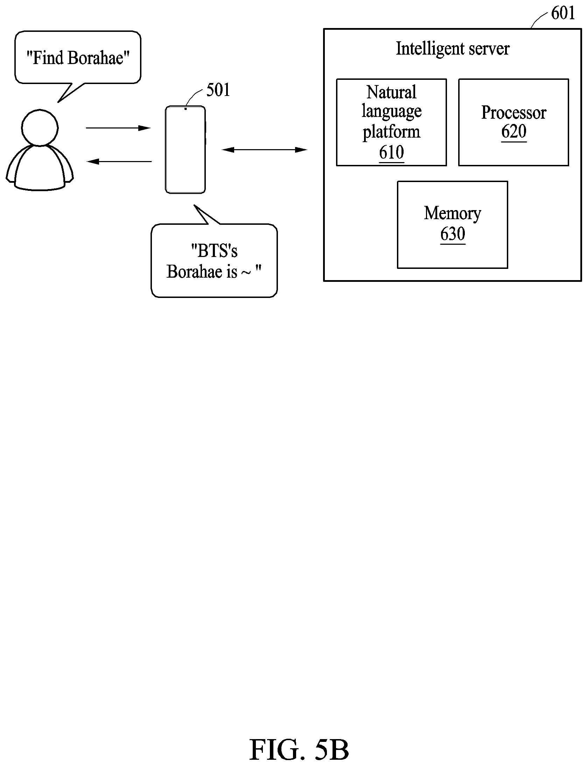

FIGS. 5A and 5B are diagrams illustrating an example of processing a user's utterance by an intelligent server according to embodiments of the disclosure.

Referring to FIGS. 5A and 5B, according to an embodiment, an electronic device 501 may include at least some of the components of the electronic device 101 described above with reference to FIG. 1 and at least some of the components of the electronic device 201 described above with reference to FIG. 2. An intelligent server 601 may include at least some of the components of the intelligent server 200 described above with reference to FIG. 2. Thus, what has been described above regarding the electronic device 501 and the intelligent server 601 with reference to FIGS. 1 to 4 will not be repeated here for conciseness.

The electronic device 501 (e.g., the electronic device 101 of FIG. 1 or the electronic device 201 of FIG. 2) and the intelligent server 601 (e.g., the intelligent server 200 of FIG. 2) may be connected through, for example, a local area network (LAN), a wide area network (WAN), a value-added network (VAN), a mobile radio communication network, a satellite communication network, or a combination thereof. The electronic device 501 and the intelligent server 601 may communicate with each other through wired communication or wireless communication (e.g., wireless LAN (e.g., Wi-Fi), Bluetooth^{™}, Bluetooth low energy (BLE), ZigBee, Wi-Fi direct (WFD), ultra-wideband (UWB), infrared data association (IrDA), and near-field communication (NFC)).

The electronic device 501 may be implemented as at least one of, for example, a smartphone, a tablet personal computer (PC), a mobile phone, a speaker (e.g., an AI speaker), a video phone, an e-book reader, a desktop PC, a laptop PC, a netbook computer, a workstation, a server, a personal digital assistant (PDA), a portable multimedia player (PMP), an MP3 player, a mobile medical device, a camera, or a wearable device.

According to an embodiment, the electronic device 501 may obtain voice data from a user's utterance and transmit the voice data to the intelligent server 601. The intelligent server 601 may analyze the user's utterance using the voice data and provide, to a device (e.g., the electronic device 501), a response (e.g., a question and an answer) to be provided to a user using an analysis result (e.g., intent, entity, and/or capsule) obtained by the analyzing. The intelligent server 601 may be implemented in software. A portion and/or entirety of the intelligent server 601 may be implemented in the electronic device 501 and/or an intelligent server (e.g., the intelligent server 200 of FIG. 2).

According to an embodiment, the intelligent server 601 may include a natural language platform 610 (e.g., the natural language platform 220 of FIG. 2), a processor 620, and a memory 630. As described above with reference to FIG. 4, the natural language platform 610 may generate a plan for performing a task corresponding to a voice input (e.g., a user's utterance) using a capsule stored in a capsule DB (e.g., the capsule DB 230 of FIG. 2). The processor 620 may access the memory 630 to execute instructions. The processor 620 may perform operations to provide a response to a user. The processor 620 may correspond to an execution engine (e.g., the execution engine 240 of FIG. 2) and may obtain a result according to the plan generated by the natural language platform 610 as described above with reference to FIG. 2. The memory 630 may store therein computer-executable instructions. The memory 630 may include the capsule DB (e.g., the capsule DB 230 of FIG. 2). As described above with reference to FIG. 2, in the capsule DB, an operation of processing the task corresponding to the voice input of the user and parameters required for the operation may be stored in the form of a concept action network (CAN) (e.g., the CAN 400 of FIG. 4). The CAN may be configured as described above with reference to FIG. 4.

Referring to FIG. 5A, according to an embodiment, the electronic device 501 may receive a user's utterance (e.g., "Pmang Gostop") through a microphone (e.g., the microphone 206 of the electronic device 201 of FIG. 2) of the electronic device 501. The user's utterance may include a word (e.g., Pmang Gostop) corresponding to a newly named entity. The electronic device 501 may generate voice data corresponding to the user's utterance. The electronic device 501 may transmit the voice data to the intelligent server 601 using a communication interface (e.g., the communication interface 202 of FIG. 2). An ASR module (e.g., the ASR module 221 of FIG. 2) of the intelligent server 601 may convert the voice data received from the electronic device 501 into text data.

According to an embodiment, the processor 620 may obtain a named entity vector (e.g., [0.99, 0.009, ..., 999]) and a sentence vector (e.g., [0.11, 0.244, ..., 333]) based on the user's utterance (e.g., "Find Pmang Gostop") converted to text. The named entity vector may be obtained as named entity information extracted from the user's utterance converted to text is encoded. For example, the user's utterance may include a word (e.g., Gostop, bell pepper dish, Hangang Park, and tyrannosaur) corresponding to a named entity (e.g., a game, a dish, a park, and a dinosaur), and the named entity information (e.g., game: 2, dish: 1, park: 0, and ...) may be information associated with the named entity included in the user's utterance. The named entity information and the named entity vector may be obtained by a module performing question and answer in response to a user's utterance (e.g., a module generating an answer in response to a user's utterance). The sentence vector (e.g., [0.11, 0.244, ..., 333]) may be obtained as sentence information extracted from the user's utterance converted to text is encoded. The sentence information may be information associated sentence elements included in the user's utterance.

The processor 620 may obtain a synthetic vector (e.g., [0.99, 0.009, ..., 999, 0.11, 0.244, ..., 333]) based on the named entity vector (e.g., [0.99, 0.009, ..., 999]) and the sentence vector (e.g., [0.11, 0.244, ..., 333]). The synthetic vector (e.g., [0.99, 0.009, ..., 999, 0.11, 0.244, ..., 333]) may be a single vector into which the named entity vector (e.g., [0.99, 0.009, ..., 999]) and the sentence vector (e.g., [0.11, 0.244, ..., 3 3 3 are merged.

The processor 620 may generate a response (e.g., a response generated based on a user's intent corresponding to the user's utterance) (e.g., "Do you want to install Pmang Gostop?") based on the synthetic vector. The intelligent server 601 may transmit the response corresponding to the user's utterance to the electronic device 501 through a front end (e.g., the front end 210 of FIG. 2). The electronic device 501 may provide the user with the response (e.g., "Do you want to install Pmang Gostop?") transmitted from the intelligent server 601.

Referring to FIG. 5B, according to an embodiment, the electronic device 501 may receive a user's utterance (e.g., "Find Borahae" ("Borahae" is literally translated as "I purple you")). The user's utterance may include a word (e.g., Borahae) corresponding to a newly named entity. As described above with reference to FIG. 5A, the electronic device 501 may generate voice data corresponding to the user's utterance through a microphone (e.g., the microphone 206 of the electronic device 201 of FIG. 2). The electronic device 501 may transmit the voice data to the intelligent server 601 using a communication interface (e.g., the communication interface 202 of FIG. 2). The ASR module (e.g., the ASR module 221 of FIG. 2) of the intelligent server 601 may convert the voice data received from the electronic device 501 to text data.

The processor 620 may obtain a named entity vector and a sentence vector based on the user's utterance (e.g., Find Borahae) converted to text. The named entity vector and the sentence vector may be obtained as described above with reference to FIG. 5A.

The processor 620 may obtain a synthetic vector based on the named entity vector and the sentence vector. The synthetic vector may be a single vector into which the named entity vector and the sentence vector are merged.

The processor 620 may generate a response (e.g., an answer corresponding to an inquiry) (e.g., "BTS's Borahae is ~ ") corresponding to the user's utterance (which is an inquiry, for example) based on the synthetic vector. The intelligent server 601 may transmit the response corresponding to the user's utterance to the electronic device 501 through the front end (e.g., the front end 210 of FIG. 2). The electronic device 501 may provide the user with the response (e.g., "BTS's Borahae is ~ ") transmitted from the intelligent server 601.

According to an embodiment, the intelligent server 601 may obtain intent information corresponding to a user's utterance and perform the foregoing operations only when a reliability (e.g., a probability value) of the intent information is less than a threshold value (e.g., approximately 80 to 90%). The intent information may be information indicating an intent of the user that is determined through an analysis of text data. The intent information may include information indicating an operation or function the user desires to execute using a device. The reliability may be calculated based on an equation (not shown) that is set based on a confidence value and/or an uncertainty value. The confidence value may be a numerical representation of the degree of confidence with which an intent information acquisition module (e.g., the NLU module 223 of FIG. 2) obtains intent information when obtaining the intent information. The uncertainty value may be a value obtained based on a Bayesian model. By selectively performing the operation of providing a response based on a synthetic vector, the intelligent server 601 may save time and resources used for providing a response.

According to an embodiment, some or all of the operations performed by the intelligent server 601 may be performed by the electronic device 501 and/or the intelligent server 601. For example, at least some of the operations performed by an NLU module (e.g., the NLU module 223 of the intelligent server 200 of FIG. 2) of the intelligent server 601 may be performed by the electronic device 501. Hereinafter, descriptions will be provided under the assumption that the electronic device 501 performs the operations described herein.

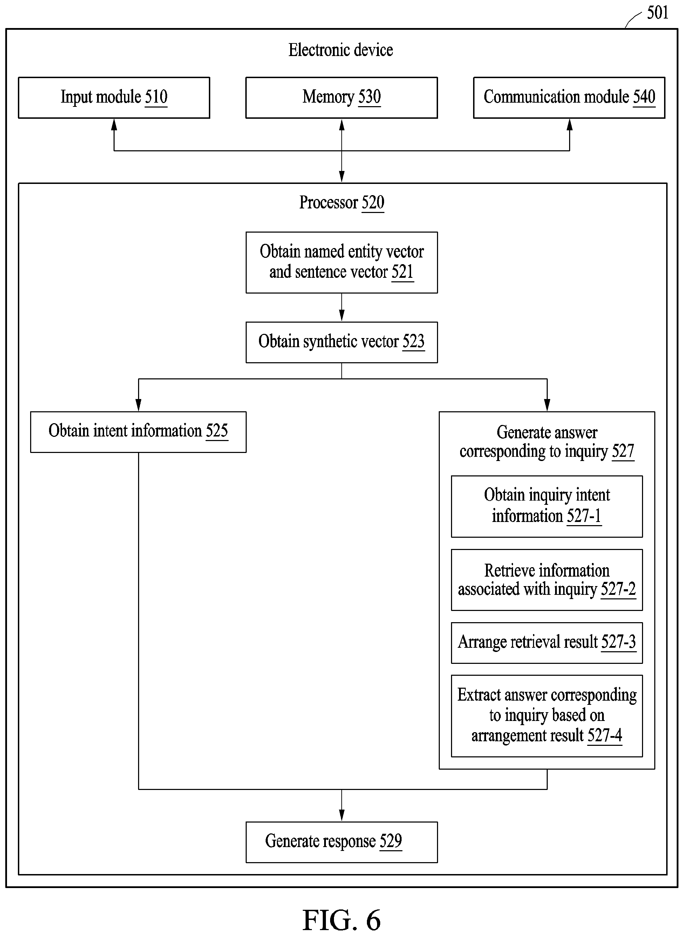

FIG. 6 is diagram illustrating an example of an electronic device according to an embodiment of the disclosure.

Referring to FIG. 6, according to an embodiment, the electronic device 501 may include at least some of the components of the electronic device 101 described above with reference to FIG. 1 and the electronic device 201 described above with reference to FIG. 2. Also, on-device AI capable of processing an utterance without communication with an intelligent server (e.g., the intelligent server 200 of FIG. 2 and the intelligent server 601 of FIG. 5A) may be provided in the electronic device 501. As described above with reference to FIGS. 2 to 4, the natural language platform 220, the capsule DB 230, or the like may be implemented in the electronic device 501.

The electronic device 501 may include an input module 510 (e.g., the input module 150 of FIG. 1), a processor 520 (e.g., the processor 120 of FIG. 1 and the processor 203 of FIG. 2), a memory 530 (e.g., the memory 130 of FIG. 1 and the memory 207 of FIG. 2) electrically connected to the processor 520, and a communication module 540 (e.g., the communication module 190 of FIG. 1).

According to an embodiment, the input module 510 may receive an input (e.g., a user's utterance) to be processed by a component (e.g., the processor 520) of the electronic device 501 from the outside (e.g., a user) of the electronic device 501. The input module 510 may include a microphone, for example.

The processor 520 (e.g., an application processor) may perform, simultaneously or in parallel, an operation of extracting a user's intent from a user's utterance including a new word (e.g., a word corresponding to a newly named entity) (e.g., an operation of obtaining intent information corresponding to the user's utterance) and an operation of obtaining an answer corresponding to the user's utterance (e.g., a user's utterance which is an inquiry), thereby providing a response corresponding to the user's utterance including the new word.

According to an embodiment, operations 521, 523, 525, 527, and 529 described below may be performed by the processor 520 of the electronic device 501. The operations described below may be performed in sequential order but not be necessarily performed in sequential order. For example, the order of the operations may change and at least two of the operations may be performed in parallel. The operations performed by the processor 520 of the electronic device 501 may be substantially the same as operations performed by a processor (e.g., the processor 620 of the intelligent server 601 of FIG. 5A) and/or a natural language platform (e.g., the natural language platform 610 of the intelligent server 601 of FIG. 5A).

In operation 521, the processor 520 may obtain a named entity vector (e.g., a named entity vector obtained as named entity information extracted from a user's utterance converted to text is encoded) and a sentence vector (e.g., a sentence vector obtained as sentence information extracted from the user's utterance converted to text is encoded).

In operation 523, the processor 520 may obtain a synthetic vector based on the named entity vector and the sentence vector. The synthetic vector may be a single vector into which the named entity vector and the sentence vector are merged.

In operation 525, the processor 520 may obtain intent information corresponding to the user's utterance based on the synthetic vector. The intent information may be information indicating a user's intent determined by an analysis of text data and may include information indicating an operation or function the user desires to execute using a device.

In operation 527, in response to the user's utterance being an inquiry, the processor 520 may generate an answer corresponding to the inquiry based on the synthetic vector. In operation 527-1, the processor 520 may obtain inquiry intent information. The inquiry intent information may be included in the intent information. In operation 527-2, the processor 520 may retrieve information associated with the inquiry based on the inquiry intent information. The processor 520 may extract the information associated with the inquiry from a document and/or DB which is a target of the inquiry. In operation 527-3, the processor 520 may arrange retrieval results obtained from the retrieving based on a set rule or a set weight. In operation 527-4, the processor 520 may extract the answer (e.g., a core answer) corresponding to the inquiry based on an arrangement result obtained from the arranging.

In operation 529, the processor 520 may generate a response based on the intent information or the answer (e.g., an answer corresponding to a user's utterance which is an inquiry).

According to an embodiment, the processor 520 may obtain intent information corresponding to a user's utterance and perform the foregoing operations only when a reliability (e.g., a probability value) of the intent information is less than a threshold value (e.g., approximately 80 to 90%). The intent information may be information indicating an intent of the user that is determined through an analysis of text data and may include information indicating an operation or function the user desires to execute using a device. The reliability may be calculated based on an equation (not shown) that is set based on a confidence value and/or an uncertainty value. The confidence value may be a numerical representation of the degree of confidence with which an intent information acquisition module obtains intent information when obtaining the intent information. The uncertainty value may be a value obtained based on a Bayesian model. By selectively performing the operation of providing a response based on a synthetic vector, the processor 520 may save time and resources used for providing a response.

According to an embodiment, the memory 530 may store various pieces of data used by at least one component (e.g., the processor 520) of the electronic device 501. The data and/or instructions stored in the memory 530 may be stored in the intelligent server 601.

According to an embodiment, the communication module 540 may communicate with the intelligent server 601. The communication module 540 may transmit, to the intelligent server 601, an utterance received from the user and/or a sentence obtained in response to the utterance. When functions of the intelligent server 601 are implemented in the electronic device 501 as on-device AI is provided in the electronic device 501, some of the functions of the intelligent server 601 may be implemented in the electronic device 501. Some or all of the operations performed by the electronic device 501 may be performed by the electronic device 501 and/or the intelligent server 601. For example, some or all of the operations described above may be performed by an NLU module (e.g., the NLU module 223 of the intelligent server 200 of FIG. 2) of the intelligent server 601. The communication module 540 may receive an utterance processing result from the intelligent server 601.

According to an embodiment, the electronic device 501 may provide a response suitable for a user's intent to the user even when it receives a user's utterance including a new word (e.g., a word corresponding to a newly named entity), and may thereby improve the performance allowing the user to experience satisfaction with a service (e.g., the response). The electronic device 501 may perform, simultaneously or in parallel, an operation of extracting a user's intent from a user's utterance (e.g., an operation of obtaining intent information corresponding to the user's utterance) and an operation of obtaining an answer corresponding to the user's utterance (e.g., a user's utterance which is an inquiry), and may provide a response corresponding to the user's utterance including the new word. The electronic device 501 may desirably classify a domain (e.g., an application) for processing the user's utterance, using a named entity vector obtained from a module performing question and answer (e.g., a module generating an answer in response to a user's utterance). The electronic device 501 may recognize the user's utterance including the new word, in accordance with the user's intent, based on an updated DB.

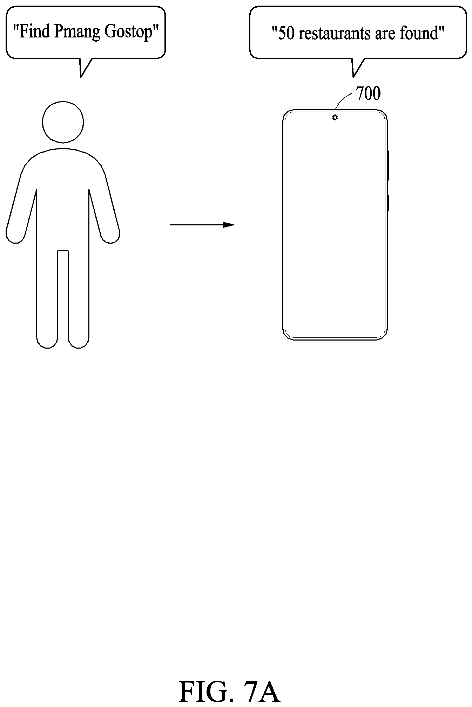

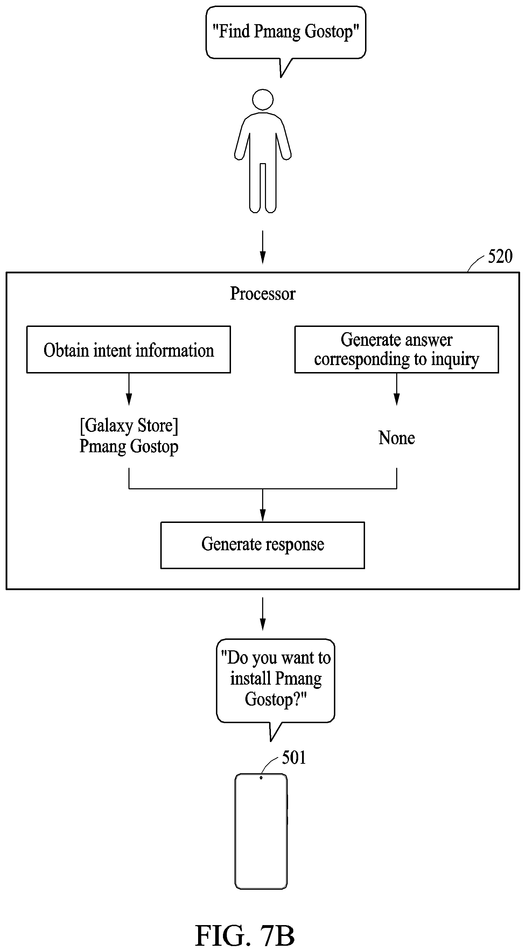

FIGS. 7A and 7B are diagrams illustrating an example of processing a user's utterance by an electronic device according to embodiments of the disclosure.

Referring to FIG. 7A, when receiving a user's utterance (e.g., "Find Pmang Gostop") including a new word (e.g., a word corresponding to a newly named entity, e.g., Pmang Gostop) from a user, an electronic device 700 may provide the user with a response (e.g., "Fifty restaurants are found") that is not suitable for a user's intent. When the electronic device 700 fails to desirably classify a domain (e.g., an application) for processing the user's utterance including the new word, the electronic device 700 may not be able to provide the user with a response suitable for the user's intent.

Referring to FIG. 7B, according to an embodiment, a processor (e.g., the processor 520 of FIG. 6) of an electronic device (e.g., the electronic device 501 of FIG. 6) may receive a user's utterance (e.g., "Find Pmang Gostop") including a new word (e.g., a word corresponding to a newly named entity, e.g., Pmang Gostop). The processor 520 may obtain a named entity vector and a sentence vector based on the user's utterance, and obtain a synthetic vector based on the named entity vector and the sentence vector. The named entity vector may be obtained as named entity information extracted from a user's utterance converted to text is encoded. The user's utterance may include a word corresponding to a named entity, and the named entity information may be information associated with the named entity included in the user's utterance. The named entity information and the named entity vector may be obtained from a module performing question and answer in response to a user's utterance (e.g., a module generating an answer in response to a user's utterance). The processor 520 may desirably classify a domain for processing the user's utterance, using the named entity vector obtained from the module performing question and answer. The processor 520 may perform, simultaneously or in parallel, an operation of extracting a user's intent from the user's utterance (e.g., an operation of obtaining intent information corresponding to the user's utterance) and an operation of obtaining an answer corresponding to the user's utterance and may thereby provide a suitable response to the user. The processor 520 may obtain intent information (e.g., [Application Store] Pmang Gostop, e.g., [GalaxyStore] Pmang Gostop) corresponding to the user's utterance based on the synthetic vector. The intent information may be information indicating an intent of the user that is determined through an analysis of text data and may include information indicating an operation or function the user desires to execute using a device. Referring to FIG. 7B, the user's utterance (e.g., "Find Pmang Gostop") may not be an inquiry, and thus the processor 520 may not obtain an answer (e.g., an answer corresponding to an inquiry) corresponding to the user's utterance. The processor 520 may generate a response (e.g., "Do you want to install Pmang Gostop?") based on the intent information (e.g., [Application Store] Pmang Gostop, e.g., [GalaxyStore] Pmang Gostop), and the electronic device 501 may provide the response (e.g., "Do you want to install Pmang Gostop?") to the user.

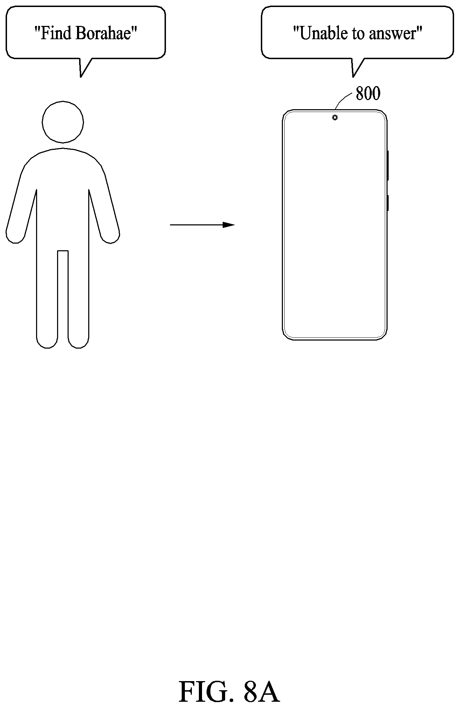

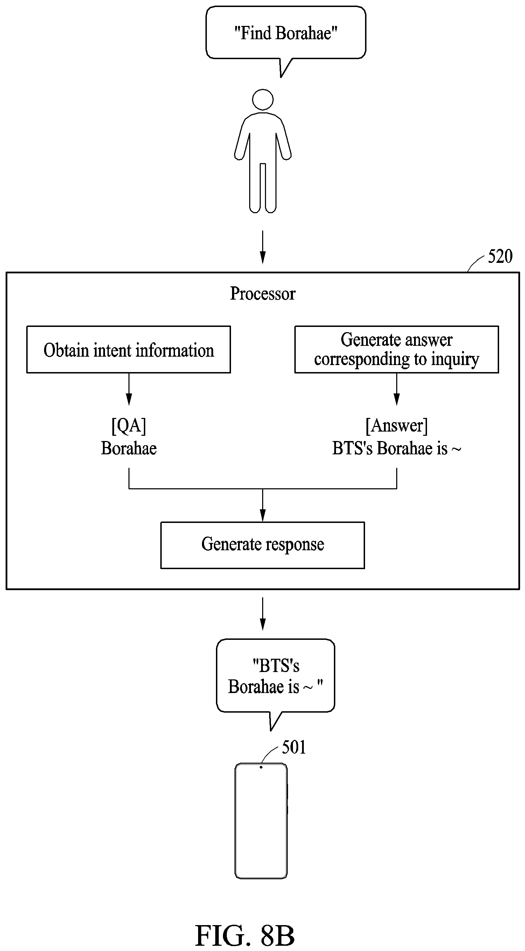

FIGS. 8A and 8B are diagrams illustrating anexample of processing a user's utterance by an electronic device according to embodiments of the disclosure.

Referring to FIG. 8A, when receiving a user's utterance (e.g., "Find Borahae") including a new word (e.g., a word corresponding to a newly named entity, e.g., Borahae which is literally translated as "I purple you") from a user, an electronic device 800 may not be able to provide a response to the user (but provide a response "unable to answer," for example). As the electronic device 800 assigns the user's utterance to be processed in a domain performing question and answer to another domain, the electronic device 800 may not be able to provide a suitable response to the user.

Referring to FIG. 8B, according to an embodiment, a processor (e.g., the processor 520 of FIG. 6) of an electronic device (e.g., the electronic device 501 of FIG. 6) may receive a user's utterance (e.g., "Find Borahae") including a new word (e.g., a word corresponding to a newly named entity, e.g., Borahae which is literally translated as "I purple you"). The processor 520 may obtain a named entity vector and a sentence vector based on the user's utterance, and obtain a synthetic vector based on the named entity vector and the sentence vector. The processor 520 may obtain intent information (e.g., [QA] Borahae) corresponding to the user's utterance based on the synthetic vector. The processor 520 may generate an answer (e.g., BTS's Borahae is ~) corresponding to the user's utterance (e.g., a user's utterance which is an inquiry) based on the synthetic vector. The processor 520 may generate a response (e.g., "BTS's Borahae is ~ ") based on the answer (e.g., BTS's Borahae is ~) corresponding to the user's utterance, and the electronic device 501 may provide the response (e.g., "BTS's Borahae is ~ ") to the user.

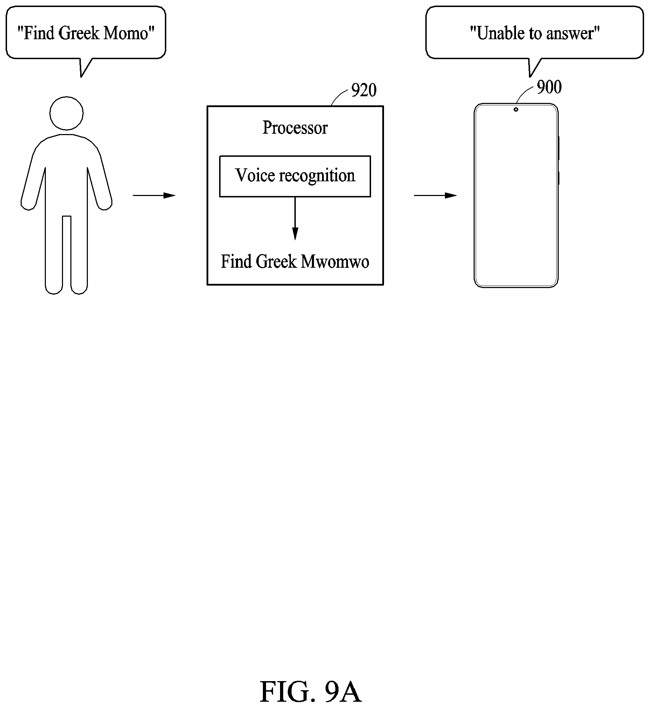

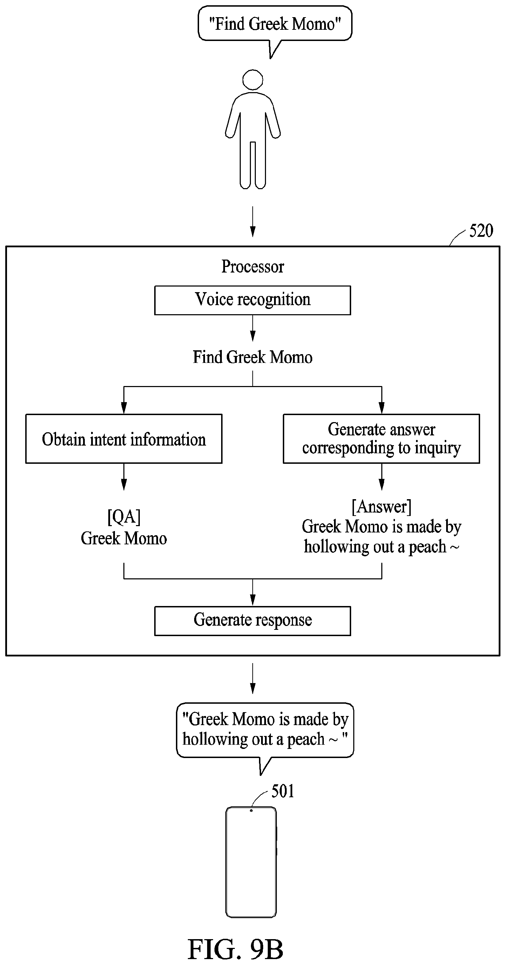

FIGS. 9A and 9B are diagrams illustrating an example of processing a user's utterance by an electronic device according to embodiments of the disclosure.

Referring to FIG. 9A, when receiving a user's utterance (e.g., "Find Greek Momo") including a new word (e.g., a word corresponding to a newly named entity) from a user, a processor 920 of an electronic device 900 may not perform named entity recognition on the new word, and the electronic device 900 may arbitrarily change the new word. For example, the electronic device 900 may change "Greek Momo" to "Greek Mwomwo." The electronic device 900 may obtain a sentence (e.g., Find Greek Mwomwo) as a result of voice recognition performed on the user's utterance. The electronic device 900 may not be able to provide a response to the user based on the result (e.g., Find Greek Mwomwo) of the voice recognition (but provide a response "unable to answer," for example). As the processor 920 is not able to perform voice recognition on the user's utterance in accordance with a user's intent, the electronic device 900 may not be able to provide a suitable response to the user.

Referring to FIG. 9B, according to an embodiment, a processor (e.g., the processor 520 of FIG. 6) of an electronic device (e.g., the electronic device 501 of FIG. 6) may receive a user's utterance (e.g., "Find Greek Momo") including a new word (e.g., a word corresponding to a newly named entity, e.g., Greek Momo). The processor 520 may convert the user's utterance to text data based on an updated DB including named entity-related information. The processor 520 may perform named entity recognition on the new word and convert the user's utterance to the text data. The processor 520 may obtain a named entity vector and a sentence vector based on the user's utterance converted to text, and obtain a synthetic vector based on the named entity vector and the sentence vector. The processor 520 may obtain intent information (e.g., [QA] Greek Momo) corresponding to the user's utterance based on the synthetic vector. The processor 520 may generate an answer (e.g., "Greek Momo is made by hollowing out a peach ~ ") corresponding to the user's utterance based on the synthetic vector. The processor 520 may generate a response (e.g., "Greek Momo is made by hollowing out a peach ~ ") based on the answer (e.g., "Greek Momo is made by hollowing out a peach ~ ") corresponding to the user's utterance (e.g., a user's utterance which is an inquiry), and the electronic device 501 may provide the response (e.g., "Greek Momo is made by hollowing out a peach ~ ") to the user.

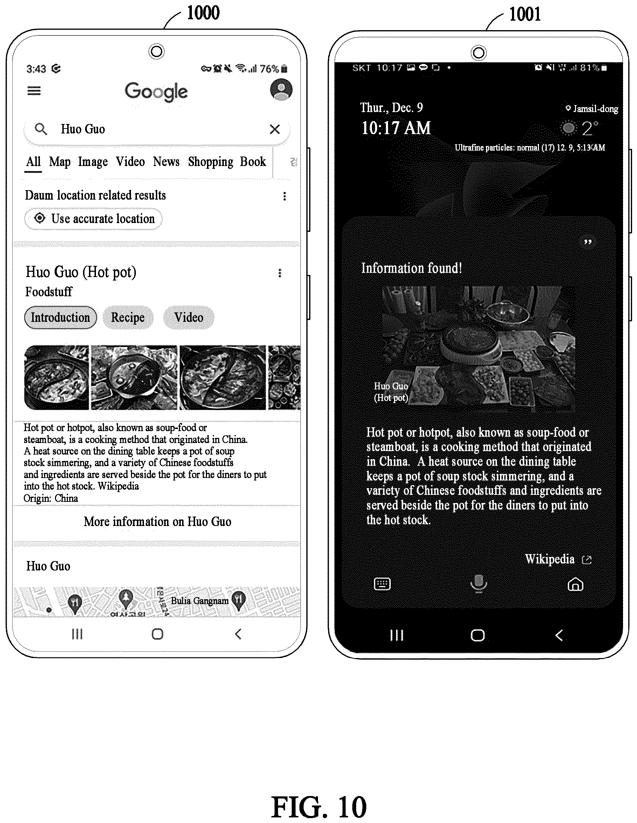

FIG. 10 is an example screen of an electronic device processing a user's utterance according to an embodiment of the disclosure.

Referring to FIG. 10, an electronic device 1000 may perform an Internet search for a new word (e.g., Huo Guo) in response to an utterance including the new word. The electronic device 1000 may provide a response to a user over a screen based on a result of performing the Internet search. The response provided by the electronic device 1000 may be less preferred by the user than a response provided by an electronic device 1001 according to an embodiment.

According to an embodiment, the electronic device 1001 may perform an Internet search for the new word (e.g., Huo Guo) in response to the utterance including the new word. The electronic device 1001 may update a DB including named entity-related information based on a result of performing the Internet search. The electronic device 1001 may provide the response to the user based on the updated DB. The response provided by the electronic device 1001 may be more suitable for a voice assistant function, compared to the response provided by the electronic device 1000. The electronic device 1001 may provide the response in a standardized and consistent form in response to the user's utterance including the new word. Based on the updated DB, the electronic device 1001 may provide a response to the user in a consistent form even in an offline situation without an additional Internet search.

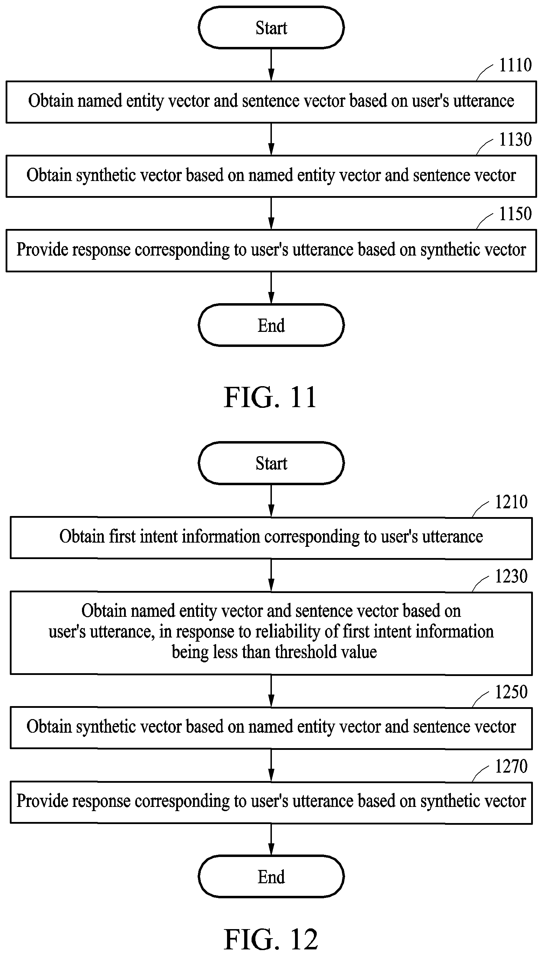

FIG. 11 is a flowchart illustrating an example of an operation method of an electronic device according to an embodiment of the disclosure.

Referring to FIG. 11, operations 1110, 1130, and 1150 described below may be performed in sequential order but not be necessarily performed in sequential order. For example, the order of operations 1110, 1130, and 1150 may change, and at least two of operations 1110, 1130, and 1150 may be performed in parallel. Operations substantially the same as operations 1110, 1130, and 1150 may be performed by a natural language platform (e.g., the natural language platform 610) and/or a processor (e.g., the processor 620) of an intelligent server (e.g., the intelligent server 601 of FIG. 5A).

In operation 1110, a processor (e.g., the processor 520 of FIG. 6) may obtain a named entity vector and a sentence vector based on a user's utterance. The named entity vector may be obtained as named entity information extracted from a user's utterance converted to text is encoded. The user's utterance may include a word corresponding to a named entity, and the named entity information may be information associated with the named entity included in the user's utterance. The named entity information and the named entity vector may be obtained from a module performing question and answer corresponding to a user's utterance, for example, a module generating an answer in response to a user's utterance. The sentence vector may be obtained as sentence information extracted from the user's utterance converted to text is encoded.

In operation 1130, the processor 520 may obtain a synthetic vector based on the named entity vector and the sentence vector. The synthetic vector may be a single vector into which the named entity vector and the sentence vector are merged.

In operation 1150, the processor 520 may provide a response corresponding to the user's utterance based on the synthetic vector. The processor 520 may obtain intent information corresponding to the user's utterance based on the synthetic vector. When the user's utterance is an inquiry, the processor 520 may generate an answer corresponding to the inquiry based on the synthetic vector. The processor 520 may provide the response based on the intent information or the answer.

FIG. 12 is a flowchart illustrating an example of an operation method of an electronic device according to an embodiment of the disclosure.

Referring to FIG. 12, operations 1210, 1230, 1250, and 1270 described below may be performed in sequential order but not be necessarily performed in sequential order. For example, the order of operations 1210, 1230, 1250, and 1270 may change, and at least two of operations 1210, 1230, 1250, and 1270 may be performed in parallel. Operations substantially the same as operations 1210, 1230, 1250, and 1270 may be performed by a natural language platform (e.g., the natural language platform 610) and/or a processor (e.g., the processor 620) of an intelligent server (e.g., the intelligent server 601 of FIG. 5A).

In operation 1210, a processor (e.g., the processor 520 of FIG. 6) may obtain first intent information directly corresponding to a user's utterance. Intent information may be information indicating an intent of a user that is determined through an analysis of text data, and may include information indicating an operation or function the user desires to execute using a device.

In operation 1230, when a reliability (e.g., a probability value) of the first intent information is less than a threshold value (e.g., approximately 80 to 90%), the processor 520 may obtain a named entity vector and a sentence vector based on the user's utterance. A reliability of intent information may be a degree of how accurately an intent of a user is determined from a user's utterance. The reliability may be calculated based on an equation (not shown) that is set based on a confidence value and/or an uncertainty value. The named entity vector may be obtained as named entity information extracted from a user's utterance converted to text is encoded. The named entity information and the named entity vector may be obtained from a module performing question and answer in response to a user's utterance. The sentence vector may be obtained as sentence information extracted from the user's utterance converted to text is encoded.

In operation 1250, the processor 520 may obtain a synthetic vector based on the named entity vector and the sentence vector. The synthetic vector may be a single vector into which the named entity vector and the sentence vector are merged.

In operation 1270, the processor 520 may provide a response corresponding to the user's utterance based on the synthetic vector. The processor 520 may obtain second intent information corresponding to the user's utterance based on the synthetic vector. When the user's utterance is an inquiry, the processor 520 may generate an answer corresponding to the inquiry based on the synthetic vector. The processor 520 may provide the response based on the second intent information and/or the answer.

According to an embodiment, an intelligent server (e.g., the intelligent server 601 of FIG. 5A) may include a memory including instructions and a processor electrically connected to the memory and configured to execute the instructions. When the instructions are executed by the processor, the processor may obtain a named entity vector and a sentence vector based on a user's utterance, obtain a synthetic vector based on the named entity vector and the sentence vector, and provide a response corresponding to the user's utterance based on the synthetic vector.

The processor may obtain intent information corresponding to the user's utterance based on the synthetic vector, generate an answer corresponding to the inquiry based on the synthetic vector in response to the user's utterance being an inquiry, and provide the response based on the intent information or the answer.

The processor may obtain inquiry intent information based on the user's utterance, retrieve and arrange information associated with the inquiry based on the inquiry intent information, and extract the answer corresponding to the inquiry based on a retrieval result obtained from the retrieving and an arrangement result obtained from the arranging.

The named entity vector may be obtained as named entity information extracted from a user's utterance obtained through a conversion to text is encoded.

The sentence vector may be obtained as sentence information extracted from the user's utterance obtained through the conversion to text is encoded.

The synthetic vector may be a single vector into which the named entity vector and the sentence vector are merged.

The processor may update a DB including named entity-related information based on a result of providing the response, and perform voice recognition based on the updated DB.

According to an embodiment, an intelligent server (e.g., the intelligent server 601 of FIG. 5A) may include a memory including instructions and a processor electrically connected to the memory and configured to execute the instructions. When the instructions are executed by the processor, the processor may obtain first intent information corresponding to a user's utterance, obtain a named entity vector and a sentence vector based on the user's utterance in response to a reliability of the first intent information being less than a threshold value, obtain a synthetic vector based on the named entity vector and the sentence vector, and provide a response corresponding to the user's utterance based on the synthetic vector.

The processor may obtain second intent information corresponding to the user's utterance based on the synthetic vector, in response to the user's utterance being an inquiry, generate an answer corresponding to the inquiry based on the synthetic vector, and provide the response based on the second intent information or the answer.

The processor may obtain inquiry intent information based on the user's utterance, retrieve and arrange information associated with the inquiry based on the inquiry intent information, and extract the answer corresponding to the inquiry based on a retrieval result obtained from the retrieving and an arrangement result obtained from the arranging.

The named entity vector may be obtained as named entity information extracted from a user's utterance obtained through a conversion to text is encoded.

The sentence vector may be obtained as sentence information extracted from the user's utterance obtained through the conversion to text is encoded.

The synthetic vector may be a single vector into which the named entity vector and the sentence vector are merged.

The processor may update a DB including named entity-related information based on a result of providing the response, and perform voice recognition based on the updated DB.

According to an embodiment, an operation method of an electronic device (e.g., the electronic device 501 of FIG. 6) may include obtaining a named entity vector and a sentence vector based on a user's utterance, obtaining a synthetic vector based on the named entity vector and the sentence vector, and providing a response corresponding to the user's utterance based on the synthetic vector.

The providing of the response may include obtaining intent information corresponding to the user's utterance based on the synthetic vector, in response to the user's utterance being an inquiry, generating an answer corresponding to the inquiry based on the synthetic vector, and providing the response based on the intent information or the answer.

The generating of the answer may include obtaining inquiry intent information based on the user's utterance, retrieving and arranging information associated with the inquiry based on the inquiry intent information, and extracting the answer corresponding to the inquiry based on a retrieval result obtained from the retrieving and an arrangement result obtained from the arranging.

The named entity vector may be obtained as named entity information extracted from a user's utterance obtained through a conversion to text is encoded, and the sentence vector may be obtained as sentence information extracted from the user's utterance obtained through the conversion to text is encoded.

The synthetic vector may be a single vector into which the named entity vector and the sentence vector are merged.

The operation method may further include updating a DB including named entity-related information based on a result of providing the response, and performing voice recognition based on the updated DB.

According to embodiments described herein, an electronic device may be a device of one of various types. The electronic device may include, as non-limiting examples, a portable communication device (e.g., a smartphone, etc.), a computing device, a portable multimedia device, a portable medical device, a camera, a wearable device, or a home appliance. However, the electronic device is not limited to the examples described above.

It should be appreciated that embodiments of the disclosure and the terms used therein are not intended to limit the technological features set forth herein to particular embodiments and include various changes, equivalents, or replacements for a corresponding embodiment. In connection with the description of the drawings, like reference numerals may be used for similar or related components. As used herein, "A or B," "at least one of A and B," "at least one of A or B," "A, B, or C," "at least one of A, B, and C," and "A, B, or C," each of which may include any one of the items listed together in the corresponding one of the phrases, or all possible combinations thereof. Terms such as "first," "second," or "initial" or "next" or "subsequent" may simply be used to distinguish the component from other components in question, and do not limit the components in other aspects (e.g., importance or order). It is to be understood that if an element (e.g., a first element) is referred to, with or without the term "operatively" or "communicatively," as "coupled with," "coupled to," "connected with," or "connected to" another element (e.g., a second element), it denotes that the element may be coupled with the other element directly (e.g., by wire), wirelessly, or via a third element.

As used in connection with embodiments of the disclosure, the term "module" may include a unit implemented in hardware, software, or firmware, and may interchangeably be used with other terms, for example, "logic," "logic block," "part," or "circuitry." A module may be a single integral component, or a minimum unit or part thereof, adapted to perform one or more functions. For example, according to an embodiment, the module may be implemented in the form of an application-specific integrated circuit (ASIC).

An embodiment set forth herein may be implemented as software (e.g., the program 140) including one or more instructions that are stored in a storage medium (e.g., the internal memory 136 or the external memory 138) that is readable by a machine (e.g., the electronic device 101). For example, a processor (e.g., the processor 120) of the machine (e.g., the electronic device 101) may invoke at least one of the one or more instructions stored in the storage medium and execute it. This allows the machine to be operated to perform at least one function according to the at least one instruction invoked. The one or more instructions may include code generated by a complier or code executable by an interpreter. The machine-readable storage medium may be provided in the form of a non-transitory storage medium. Here, the term "non-transitory" simply denotes that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to an embodiment of the disclosure may be included and provided in a computer program product. The computer program product may be traded as a product between a seller and a buyer. The computer program product may be distributed in the form of a machine-readable storage medium (e.g., a compact disc read-only memory (CD-ROM)), or be distributed (e.g., downloaded or uploaded) online via an application store (e.g., PlayStore^{™}) or between two user devices (e.g., smart phones) directly. If distributed online, at least part of the computer program product may be temporarily generated or at least temporarily stored in the machine-readable storage medium, such as a memory of the manufacturer's server, a server of the application store, or a relay server.

According to embodiments, each component (e.g., a module or a program) of the above-described components may include a single entity or multiple entities, and some of the multiple entities may be separately disposed in different components. According to embodiments, one or more of the above-described components or operations may be omitted, or one or more other components or operations may be added. Alternatively or additionally, a plurality of components (e.g., modules or programs) may be integrated into a single component. In such a case, according to embodiments, the integrated component may still perform one or more functions of each of the plurality of components in the same or similar manner as they are performed by a corresponding one of the plurality of components before the integration. According to embodiments, operations performed by the module, the program, or another component may be carried out sequentially, in parallel, repeatedly, or heuristically, or one or more of the operations may be executed in a different order or omitted, or one or more other operations may be added.

While the disclosure has been shown and described with reference to embodiments thereof, it will be understood by those skilled in the art that various changes in form and details may be made therein without departing from the spirit and scope of the disclosure as defined by the appended claims and their equivalents.

## Claims

1. An intelligent server comprising:
a processor; and
a memory electrically connected to the processor and storing instructions which, when executed by the processor, cause the processor to:
based on a user's utterance, obtain a named entity vector and a sentence vector,
based on the named entity vector and the sentence vector, obtain a synthetic vector, and
based on the synthetic vector, provide a response corresponding to the user's utterance.

2. The intelligent server of claim 1, wherein the instructions, when executed by the processor, further cause the processor to:
based on the synthetic vector, obtain intent information corresponding to the user's utterance,
in response to the user's utterance being an inquiry, generate an answer corresponding to the inquiry based on the synthetic vector, and
based on the intent information or the answer, provide the response.

3. The intelligent server of claim 2, wherein the instructions, when executed by the processor, further cause the processor to:
based on the user's utterance, obtain inquiry intent information,
based on the inquiry intent information, retrieve and arrange information associated with the inquiry, and
based on a retrieval result obtained from the retrieving and an arrangement result obtained from the arranging, extract the answer corresponding to the inquiry.

4. The intelligent server of claim 1, wherein the named entity vector is obtained as named entity information extracted from the user's utterance obtained through a conversion to text is encoded.

5. The intelligent server of claim 1, wherein the sentence vector is obtained as sentence information extracted from the user's utterance obtained through a conversion to text is encoded.

6. The intelligent server of claim 1, wherein the synthetic vector is a single vector into which the named entity vector and the sentence vector are merged.

7. The intelligent server of claim 1, wherein the instructions, when executed by the processor, further cause the processor to:
based on a result of providing the response, update a database (DB) comprising named entity-related information; and
based on the updated DB, perform voice recognition.

8. An intelligent server comprising:
a processor; and
a memory electrically connected to the processor and storing instructions which, when executed by the processor, cause the processor to:
obtain first intent information corresponding to a user's utterance,
in response to a reliability of the first intent information being less than a threshold value, obtain a named entity vector and a sentence vector based on the user's utterance,
based on the named entity vector and the sentence vector, obtain a synthetic vector, and
based on the synthetic vector, provide a response corresponding to the user's utterance.

9. The intelligent server of claim 8, wherein the instructions, when executed by the processor, further cause the processor to:
based on the synthetic vector, obtain second intent information corresponding to the user's utterance,
in response to the user's utterance being an inquiry, generate an answer corresponding to the inquiry based on the synthetic vector, and
based on the second intent information or the answer, provide the response.

10. The intelligent server of claim 9, wherein the instructions, when executed by the processor, further cause the processor to:
based on the user's utterance, obtain inquiry intent information,
based on the inquiry intent information, retrieve and arrange information associated with the inquiry, and
based on a retrieval result obtained from the retrieving and an arrangement result obtained from the arranging, extract the answer corresponding to the inquiry.

11. The intelligent server of claim 8, wherein the named entity vector is obtained as named entity information extracted from the user's utterance obtained through a conversion to text is encoded.

12. The intelligent server of claim 8, wherein the sentence vector is obtained as sentence information extracted from the user's utterance obtained through a conversion to text is encoded.

13. The intelligent server of claim 8, wherein the synthetic vector is a single vector into which the named entity vector and the sentence vector are merged.

14. The intelligent server of claim 8, wherein the instructions, when executed by the processor, further cause the processor to:
based on a result of providing the response, update a database (DB) comprising named entity-related information, and
based on the updated DB, perform voice recognition.

15. The intelligent server of claim 8,
wherein the reliability is calculated based on an equation set based on at least one of a confidence value or an uncertainty value,
wherein the confidence value comprises a numerical representation of a degree of confidence with which an intent information acquisition circuitry obtains the intent information when obtaining the intent information, and
wherein the uncertainty value comprises a value obtained based on a Bayesian model.
